# EUROPÄISCHE PATENTANMELDUNG

(11) **EP 1 210 865 A2**
(43) Veröffentlichungstag der Anmeldung: **05.06.2002**
(21) Anmeldenummer: 01127539.3
(22) Anmeldetag: 19.11.2001
(51) Int. Cl.: A01F 25/18

(54) **Fahrbare Anordnung zur Herstellung eines Silagemisches, insbesonders für bodenlagernde Silage**

(30) Priorität: 17.11.2000 DE 10057320
(71) Anmelder: Altenbuchner, Josef, 5122 Hochburg-Ach (AT)
(72) Erfinder: Altenbuchner, Josef, 5122 Hochburg-Ach (AT)
(74) Vertreter: Dupal, Helmut, Dipl.-Ing.

(57) **Zusammenfassung**

Fahrbare Anordnung zur Herstellung eines Silagegemisches für die Fütterung und/oder für lagerfähig in Silofolie (16) eingeschlossenes bodenlagerndes Silagegemisch, mit einer fahrbaren Mischeinrichtung (50) und insbesonders einer Stopfmaschine für die Füllung der Silofolie (16), bei der auf einem fahrbaren Rahmen (52) mehrere Vorratsbehälter (53,54,55) für die Lagerung der Bestandteile eines Silagemisches angebracht sind, die die Anteile für ein Silagegemisch mit einer Dosiereinrichtung (56) abgeben und einer nachgeordneten Förderstrecke (58) und einer daran anschließenden Mischstrecke (57) und einem Beladeförderer (51) zur Überführung des Silagegemisches in die Beschickungsvorrichtung (4) einer Stopfmaschine zuführen, deren Maschinenrahmen (20) an den Rahmen (52) der Mischeinrichtung (50) ankuppelbar und gemeinsam mit dieser verfahrbar ist, wobei mehrere Vorratsbehälter (53,54,55), übereinander angeordnet auf dem Rahmen (52) der Mischeinrichtung (50), insbesonders auf Wiegevorrichtungen aufgehängt angebracht sind, von denen jeder mit einer Austrageinrichtung (56) versehen ist, die mit der zugeordneten Wiegevorrichtung jeweils eine Dosiervorrichtung bildet, mit denen die Bestandteile des Silagegemisches dosiert auf die Förderstrecke (58) abgeworfen wird, die insbesonders auf einer Wiegeeinrichtung gelagert ist und von der die Anteile zur Mischung auf die Mischstrecke (57) absätzig überführt werden, mit der nach erfolgter Mischung das fertige Silagegemisch einem Beladeförderer (51) aufgegeben wird und insbesonders an die Beschickungsvorrichtung (4) einer Stopfmaschine zum Füllen der Silagefolie (16) abgegeben wird.

## Beschreibung

Die Erfindung betrifft eine Anordnung zur Herstellung eines Silagegemisches für die Fütterung und/oder für lagerfähig in Silofolie eingeschlossenes bodenlagernde Silage, mit einer fahrbaren Mischeinrichtung mit den Merkmalen des Oberbegriffes des Anspruches 1 und insbesonders einer Stopfmaschine für die Füllung der Silofolie.

Mischeinrichtungen dieser Art sind meist umfangreich gebaut, mit großen Bunkern und aufwendigen angetrieben Mischeinbauten, wie einer Mehrzahl von Mischschnecken unterschiedlicher Bauart.

Nachteilig ist dabei, daß diese Mischeinrichtungen für eine einwandfreie Mischung und genügende Leistung entsprechend groß gebaut sind und daß das Beschicken einer Stopfmaschine nur mit einem gesonderten Fördergerät geschieht. Dabei ist die Genauigkeit bei der Herstellung eines Futtergemisches gering, weil die Bestimmung der Anteile im Wesentlichen nach Schätzung der zugesetzten Anteile eines Silagegemisches geschieht.

Aufgabe der Erfindung ist es, eine Mischeinrichtung für Silagegemische zu schaffen, bei der verhältnismäßig kleine Anteile in getrennten Vorratsbehältern für die Verarbeitung raumsparend gelagert werden können, die mit erheblicher Genauigkeit absatzweise gemischt und insbesonders an eine Stopfmaschine abgegeben werden.

Diese Aufgabe wird bei einer gattungsgemäßen Anordnung mit den Merkmalen des kennzeichnenden Teiles des Anspruches 1 gelöst.

Die Unteransprüche betreffen besonders vorteilhafte Ausgestaltungen der Erfindung und diese bilden ebenso wie Anspruch 1 gleichzeitig einen Teil der Beschreibung der Erfindung.

Mit der Anordnung der Vorratsbehälter für die Anteile des Silagegemisches übereinander wird eine besonders raumsparende Anordnung verwirklicht und durch die Aufhängung jedes einzelnen Vorratsbehälters auf Wiegestäben und die Austattung mit einer gesonderten Austragsvorrichtung ergibt eine Dosiervorrichtung mit einer sehr genauen Zusammenstellung einer jeden Silagegemisch-Charge durch Differenzwägung der einzelnen Vorratsbehälter.

Die Ausbildung der Förderstrecke als Förderband, das auf Wiegestäben gelagert ist, ergibt die Möglichkeit der Wägung der Gesamtmenge.

Das Förderband transportiert erst nach Erreichen der Gesamtmenge der zu mischenden Silageanteile, diese zur Mischstrecke in der absätzig gemischt wird und erst danach wird das fertige Silagegemisch einem Beladeförderer übergeben, der die Beladung der Beschickungsvorrichtung der Stopfmaschine je nach deren Füllstand vornimmt.

Durch den getrennten Aufbau der Mischeinrichtung auf einem gesonderten fahrbaren Rahmen, besteht auch die Möglichkeit einer anderweitigen Verwendung, etwa zur Frischbereitung von Silagefutter.

Die Anordnung der Vorratsbehälter in Vertikalabständen übereinander und überkragend gestaffelt, mit Abständen in waagrechter Richtung, ermöglicht die Herstellung getrennter Wägeeinheiten und den störungsfreien Austrag der Anteile des Silagegemisches auf die Förderstrecke.

Zur einfachen raschen Beschickung ist die Ausbildung der Wände der Vorratsbehälter an der der Abwurfseite gegenüberliegenden Seite vorgesehen, die dann mit einem Frontlader vorgenommen werden kann.

Eine besonders vorteilhafte Ausgestaltung wird erreicht, wenn die Vorratsbehälter jeder an einem eigenen absenkbaren oder schwenkbaren Träger gelagert ist mit dem die Vorratsbehälter auf dem Rahmen abgesetzt oder zumindest auf eine geringere Fahrzeughöhe abgesenkt werden können.

Die Anordnung eines Förderbandes als Förderstrecke die als Ablage für die Anteile einer Charge des herzustellenden Silagegemisches dient, ist für die genaue Mischung und für die rasche unterscheidbare Änderung der Zusammensetzung einer Silage-Charge besonders gut geeignet.
Mit der absätzig mischenden Misch- und Förderschnecke der Mischstrecke kann eine Mischung in einem beliebig weitgehenden Mischungsverhältnis hergestellt werden, bevor die Abgabe durch öffnen eines Verschlusses und/oder durch Inbetriebnahme des beladeförderers erfolgt.

Die Anordnung eines Beladeförderer am Ende der Mischstrecke in Form eines Schräg- oder Steilbandförderer mit Fördertaschen ergibt eine kompakte kurz bauende Fördereinheit.

Die Kupplung des Rahmens der Mischeinrichtung mit dem Maschinenrahmen der Stopfmaschine ermöglicht die gleichmäßige Zuteilung des Silagegemisches, weil die geometrische Zuordnung während der Fahrt beim Füllen von Silagefolie stets erhalten bleibt.

Die Erfindung wird nachstehend an Hand der Zeichnung einer Ausführungsform der erfinderischen Anordnung beschrieben.

### Es zeigt:

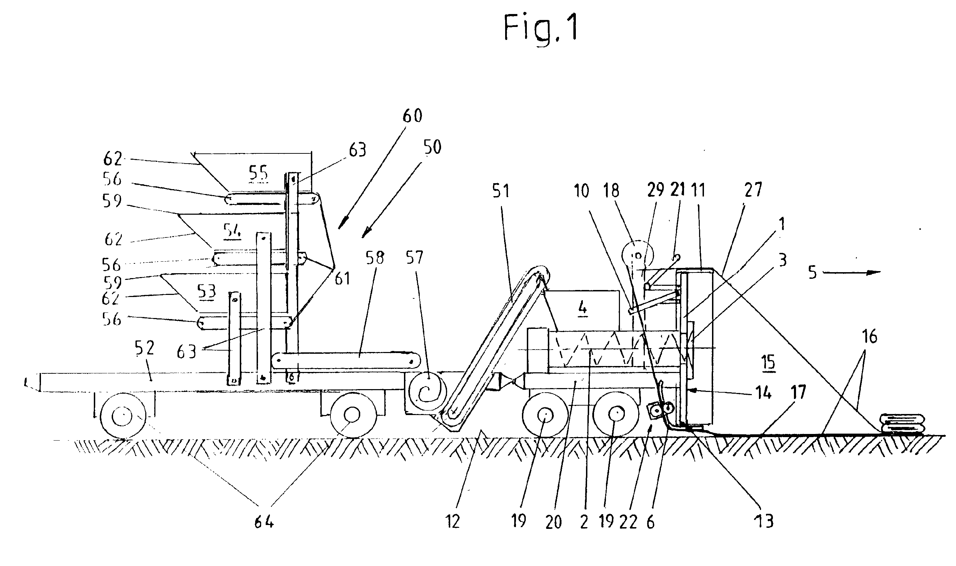

Fig.1 eine Seitenansicht der Mischeinrichtung.

Die fahrbare Mischeinrichtung 50 zur Herstellung eines Silagegemisches für die Fütterung und/oder für lagerfähig in Silofolie 16 eingeschlossene bodenlagernde Silage besitzt einen Rahmen 52, der an den Maschinenrahmen 20 einer Stopfmaschine für Silofolien 16 ankuppelbar ist, auf dem drei Vorratsbehälter 53,54,55 angebracht sind.

Die Vorratsbehälter 53,54,55 sind in Vertikalabstanden 59 übereinander an schwenkbaren Trägern 63 gelagert, die an dem Rahmen 52 der Mischeinrichtung angebracht sind.

Die Vorratsbehälter 53,54,55 sind mit darunter angebrachten Bandförderern als Austragseinrichtungen 56 versehen, die das jeweils in den Vorratsbehältern bevorratete Mischgut auf eine Förderstrecke 58 abwerfen und sind an Wiegevorrichtungen aufgehängt gelagert, sodaß Austragseinrichtung 56 und Wiegevorrichtung sie über die Differenzgewichtsbestimmung als Dosiervorrichtung zusammenarbeiten.

An der Abwurfseite 60 oberhalb der als Förderband ausgebildeten Förderstrecke 58 sind die Vorratsbehälter 53,54,55 von unten nach oben vorragend, in Abständen 61 in waagrechter Richtung gestaffelt, angebracht um den Abwurf zu erleichtern.

An der gegenüberliegenden Seite zur Abwurfseite 60 der Vorratsbehälter 53,54,55 sind diese mit eine schräg trichterartig ausgerichteten Wand 62 versehen, die das beladen der Vorratsbehälter mit Beladegeräten erleichtert.

Das Förderband der Förderstrecke 58 ist zur zusätzlichen Bestimmung des Gewichtes einer absätzig gebildeteten Charge an Silagemischgut an Wiegevorrichtungen, wie Wiegestäben, gelagert.

Das Förderband ransportiert nach Abwerfen der Anteile einer Charge Silagegemisch auf das Förderband der Förderstrecke 58 zur Mischstrecke 57, die von einer quer an dem Rahmen angebrachten Misch- und Förderschnecke gebildet ist und in der die Mischung der aufgegebenen Charge stattfindet.

Das fertig gemischte Silagegut wird auf einen Beladeförderer 51 ausgetragen, der von einem Schrägbandtaschenförderer gebildet wird und das Silagegut in die Beschickungsvorrichtung 4 der Förderschnecke 2 auf dem Maschinenrahmen 20 der Stopfmaschine abwirft.

### Bezugszeichenverzeichnis

- 1: Stopfplatte
- 2: Förderschnecke der Stopfmaschine
- 4: Beschickungseinrichtung der Förderschnecke 2
- 16: Silofolie
- 20: Maschinenrahmen der Stopfmaschine

- 50: Mischeinrichtung
- 51: Beladeförderer
- 52: Rahmen der Mischeinrichtung 50
- 53: unterster Vorratsbehälter
- 54: mittlerer Vorratsbehälter
- 55: oberster Vorratsbehälter
- 56: Austrageinrichtung des Vorratsbehälters 53,54,55
- 57: Mischstrecke der Mischeinrichtung 50
- 58: Förderstrecke der Mischeinrichtung 50
- 59: Vertikalabstand zwischen zwei Vorratsbehältern 53,54 oder 54,55
- 60: Abwurfseite des Vorratsbehälters 53,54,55
- 61: waagrechter Abstand der Vorratsbehälter 53,54 und 54,55
- 62: schräge trichterartige Wand des Vorratsbehälters 53,54,55
- 63: schwenkbarer Träger des Vorratsbehälters 53,54,55

## Patentansprüche

1. Fahrbare Anordnung zur Herstellung eines Silagegemisches für die Fütterung und/oder für lagerfähig in Silofolie eingeschlossenes bodenlagerndes Silagegemisch, mit einer fahrbaren Mischeinrichtung, insbesonders zur Speisung einer Stopfmaschine für die Füllung einer Silofolie, wobei die Mischeinrichtung auf einem fahrbaren Rahmen angeordnet ist auf dem mehrere Vorratsbehälter für die Lagerung der Bestandteile eines Silagemisches angebracht sind, die die Anteile für ein Silagegemisch mit einer Dosiereinrichtung an eine nachgeordnete Förderstrecke abgeben, die einer daran anschließenden Mischstrecke und anschließend einem Beladeförderer zuführen, zur Überführung des Silagegemisches an eine Speichereinrichtung, insbesonders in die Beschickungsvorrichtung einer Stopfmaschine, deren Maschinenrahmen an den Rahmen der Mischeinrichtung ankoppelbar und gemeinsam mit dieser verfahrbar ist, **dadurch gekennzeichnet, daß** mehrere Vorratsbehälter (53,54,55), übereinander angeordnet auf dem Rahmen (52) der Mischeinrichtung (50), insbesonders auf Wiegevorrichtungen aufgehängt, angebracht sind, von denen jeder Vorratsbehälter (53,54,55) mit einer Austrageinrichtung (56) versehen ist, die mit der zugeordneten Wiegevorrichtung jeweils eine Dosiervorrichtung bildet, wobei von den Austrageinrichtungen (56) die Bestandteile des Silagegemisches dosiert auf die Förderstrecke (58) abgeworfen werden, die insbesonders auf einer Wiegeeinrichtung gelagert ist und von der die Anteile zur Mischung auf die Mischstrecke (57) absätzig überführt werden, mit der nach erfolgter Mischung das fertige Silagegemisch einem Beladeförderer (51) aufgegeben wird und insbesonders an die Beschickungsvorrichtung (4) einer Stopfmaschine zum Füllen einer Silagefolie (16) abgegeben wird.

2. Fahrbare Anordnung nach dem vorhergehenden Anspruch, **dadurch gekennzeichnet, daß** jeder Vorratsbehälter (53, 54,55) mit einem eigenen Bandförderer als Austragseinrichtung (56) versehen ist, der den durch Differenzwägung dosierten Anteil des Silagegemisches auf eine darunter angeordnete Förderstrecke (58) abwirft.

3. Fahrbare Anordnung nach einem der vorhergehenden Ansprüche, **dadurch gekennzeichnet, daß** die Vorratsbehälter (53,54,55) zumindest in Arbeitslage in Vertikalabständen (59) übereinander und an der Abwurfseite (60) waagrecht in Abständen (61) überkragend gestaffelt versetzt angeordnet sind.

4. Fahrbare Anordnung nach einem der vorhergehenden Ansprüche, **dadurch gekennzeichnet, daß** die Vorratsbehälter (53,54,55) an der der Abwurfseite (60) gegenüberliegenden Seite mit einer, zumindest in Arbeitslage, schräg trichterartig angestellten Wand (62), für die Nachfüllung, versehen sind.

5. Fahrbare Anordnung nach einem der vorhergehenden Ansprüche, **dadurch gekennzeichnet, daß** die Vorratsbehälter (53,54,55) an schwenkbaren Trägern (63) gelagert sind, an denen sie in Transport- und Ruhelage auf den Rahmen (51) absenkbar, vorzugsweise abschwenkbar bewegbar sind.

6. Fahrbare Anordnung nach einem der vorhergehenden Ansprüche, **dadurch gekennzeichnet, daß** an der Abwurfseite (60) der Vorratsbehälter (53,54,55), im Abstand unterhalb, die Förderstrecke (58), als Förderband ausgebildet, angeordnet ist, das die Bestandteile für das Silagegemisch auf die, als Mischund Förderschnecke ausgebildete, Mischstrecke (57) abwirft.

7. Fahrbare Anordnung nach einem der vorhergehenden Ansprüche, **dadurch gekennzeichnet, daß** die Mischstrecke (57) als Misch- und Förderschnecke in einem Schneckentrog laufend ausgebildet ist, mit einem Verschluß, der während des Mischvorganges geschlossen wird oder die mit einer Steuerung versehen ist, mit der der Beladeförderer (51) während des Mischvorganges stillgesetzt wird.

8. Fahrbare Anordnung nach einem der vorhergehenden Ansprüche, **dadurch gekennzeichnet, daß** an der Austragsseite der Misch- und Förderschnecke der Beladeförderer (51) angeordnet ist, der als Schräg- oder Steilbandförderer, vorzugsweise mit Fördertaschen ausgebildet, das ausgetragene gemischte Silagegut aufnimmt und in die Beschickungseinrichtung (4) der angekoppelten Stopfmaschine abwirft.

9. Fahrbare Anordnung nach einem der vorhergehenden Ansprüche, **dadurch gekennzeichnet, daß** die Stopfmaschine eine auf dem Maschinenrahmen (20) aufgebaute vertikale Stopfplatte (1) besitzt, über deren Ränder die zu füllende Silofolie (16) geführt ist, wobei die Stopfplatte (1) von einer Stopfschnecke (2) gespeist wird, die das Silagegemisch des Beladeförderers (51) der Mischeinrichtung (50) von der aufgesetzten Bechickungsvorrichtung (4) zugeführt erhält.
